# EUROPÄISCHE PATENTSCHRIFT

(11) **EP 2 499 842 B1**
(45) Veröffentlichungstag und Bekanntmachung des Hinweises auf die Patenterteilung: **12.08.2020**
(21) Anmeldenummer: 10760657.6
(22) Anmeldetag: 22.09.2010
(51) Int. Cl.: H04R 29/00, H04H 20/61, H04R 27/00, H04W 24/02, H04W 24/10, H04W 88/08

(54) **NETZWERKSYSTEM FÜR AUDIOEINRICHTUNGEN, VERFAHREN UND COMPUTERPROGRAMM**
NETWORK SYSTEM FOR AUDIO EQUIPMENT, METHOD AND COMPUTER PROGRAM
SYSTÈME DE RÉSEAU POUR DES DISPOSITIFS AUDIO, PROCÉDÉ ET PROGRAMME INFORMATIQUE

(30) Priorität: 09.11.2009 DE 102009046544
(43) Veröffentlichungstag der Anmeldung: 19.09.2012
(73) Patentinhaber: Robert Bosch GmbH, 70442 Stuttgart (DE)
(72) Erfinder: KOCH, Hartwig, 31139 Hildesheim (DE); KIEHNE, Holger, 31224 Peine (DE); KLINGLER, Florian, 37073 Goettingen (DE); CIRCA, Radu, 31134 Hildesheim (DE); HOFMANN, Frank, 31139 Hildesheim (DE); SPREITZ, Gerald, 30880 Laatzen (DE); JAKOBLEW, Sascha, 31141 Hildesheim (DE)
(86) Internationale Anmeldenummer: PCT/EP2010/063959
(87) Internationale Veröffentlichungsnummer: WO 2011/054596

(56) Entgegenhaltungen:
- DE-A1-102005 054 258
- DE-A1-102005 054 258
- US-A1- 2009 233 617
- US-A1- 2009 233 617

## Beschreibung

### Stand der Technik

Die Erfindung betrifft ein Netzwerksystem für Audioeinrichtungen mit mehreren Basisstationen und mit mehreren Mikrofonmodulen, wobei die Mikrofonmodule den Basisstationen über Konfigurationsdaten zugeordnet und/oder zuordbar sind und wobei jedes Mikrofonmodul einer Mikrofonmodul-Basisstation-Zuordnung zur Übermittlung von Audioinformationen auf einer Sendefrequenz an die zugeordnete Basisstation der gleichen Mikrofonmodul-Basisstation-Zuordnung ausgebildet ist, wobei die Basisstationen miteinander vernetzt sind, so dass die Konfigurationsdaten austauschbar sind, und mit einer Steuerungseinrichtung, wobei die Steuerungseinrichtung programmtechnisch und/oder schaltungstechnisch ausgebildet ist, die Konfigurationsdaten der Basisstationen und/oder der Mikrofonmodule und/oder der Mikrofonmodul-Basisstation-Zuordnungen automatisiert anzupassen. Die Erfindung betrifft auch ein Verfahren zur Konfiguration eines oder des Netzwerksystems, sowie ein Computerprogramm.

Drahtlose Mikrofonsysteme werden zum Beispiel bei Theater, Bühnen, Fernsehen, Rundfunk oder auch in Konzerten benutzt, um Stimmen oder Instrumente für ein großes Publikum zu verstärken. Aufgrund der Vielzahl der Akteure bzw. Musiker werden eine entsprechende Anzahl von Audiokanälen zur Übertragung der Audioinformationen benötigt. So können bereits in üblichen Anwendungen 20 bis 50 Audiokanäle in einem Parallelbetrieb benötigt werden.

Ein typisches drahtloses Mikrofonsystem besteht aus einem Sender und einem Mikrofon, welche gemeinsam eine Einheit bilden, und einem Empfänger, der die von dem Sender übermittelten Audioinformationen empfängt. Zur Weitergabe der Audioinformationen, zum Beispiel an Verstärker, Aufnahmegeräte etc., werden analoge und digitale Schnittstellen wie XLR und AES/EBU verwendet. Zur Weitergabe der Konfigurationsdaten kann auf den Empfänger über eine Schnittstelle von einem externen Gerät aus zugegriffen werden. Übliche Schnittstellen sind zum Beispiel CAN, USB oder Ethernet.

Damit die Mikrofonsysteme unabhängig und störungsfrei voneinander die Audiosignale übertragen können, ist es üblich, dass bei den Sendern unterschiedliche Sendefrequenzen eingestellt werden können. In einfachen Systemen werden die Sendefrequenzen beispielsweise über Einstelleinrichtungen definiert, bei aufwendigeren Systemen kann die Sendefrequenz auch über die Schnittstelle am Empfänger eingestellt werden.

Die Druckschrift DE 10 2005 054 258 A1 betrifft ein Verfahren zum Zuweisen einer Frequenz für eine drahtlose Audiokommunikation. In dieser Druckschrift wird offenbart, wie von einem Frequenzinformationsserver Frequenzen an ein drahtloses Mikrofon bzw. einen drahtlosen Kopfhörer übertragen werden.

Ein System zur Steuerung von mobilen und drahtlos mit einer Zentraleinheit verbundenen Sende- und/oder Empfangsvorrichtungen ist beispielsweise in der Druckschrift DE 100 358 24 A1, offenbart. In dieser Druckschrift wird ein System beschrieben, welches eine Mehrzahl von Funkmikrofonen aufweist, die mit einer Zentraleinheit datentechnisch verbunden sind, wobei der Datenfluss bidirektional ausgestaltet ist, so dass Daten von der Zentraleinheit in Richtung der Funkmikrofone gesendet werden können. Bei den Daten kann es sich beispielsweise um die Werte von Sendefrequenzen handeln, über die die Funkmikrofone Audioinformationen an die Zentraleinheit senden. Mit der Zentraleinheit ist eine übergeordnete Verwaltung, Auswahl und Steuerung der Betriebsparameter der drahtlosen Übertragungsstrecken möglich. Beispielsweise kann manuell oder automatisch auf eine Ersatzfrequenz umgeschaltet werden, wenn eine vorgesehene Frequenz gestört ist.

Die Druckschrift US 2009/0233617 A1 beschreibt aus einem anderen Technikbereich eine Netzwerkarchitektur für mobile Endgeräte für die Telekommunikation. In dieser Druckschrift wird für die Zuteilung von Kanälen an die mobilen Endgeräte in verschiedenen Zellen vorgeschlagen, jeweils eine intelligente Liste der verfügbaren Kanäle zu erstellen.

### Offenbarung der Erfindung

Im Rahmen der Erfindung wird ein Netzwerksystem für Audioeinrichtungen mit den Merkmalen des Anspruches 1 sowie ein Verfahren und ein Computerprogramm mit den Merkmalen des Anspruches 8 bzw. 9 vorgeschlagen. Bevorzugte oder vorteilhafte Ausführungsformen der Erfindung ergeben sich aus den Unteransprüchen, der nachfolgenden Beschreibung sowie den beigefügten Figuren.

Erfindungsgemäß wird ein Netzwerksystem für Audioeinrichtungen vorgeschlagen, wobei die Audioeinrichtungen zumindest teilweise als Mikrofonmodule, im speziellen als drahtlose Mikrofonmodule ausgebildet sind. Weitere Audioeinrichtungen können allerdings auch als Lautsprecher, insbesondere Im-Ohr-Lautsprecher, Monitorlautsprecher, etc. realisiert sein. Das Netzwerksystem ist ausgebildet, um Mikrofonmodule für Theatervorstellungen, Fernsehauftritte, Konzerte, Diskussionen oder anderen Situationen zu steuern und/oder zu parametrisieren.

Das Netzwerksystem umfasst mehrere Basisstationen sowie mehrere derartige Mikrofonmodule, wobei die Mikrofonmodule den Basisstationen, insbesondere wahlfrei über Konfigurationsdaten zugeordnet und/oder zuordbar sind. Die Mikrofonmodule weisen ein Mikrofon und einen Sender auf, mit dem sie drahtlos mit der zugeordneten Basisstation kommunizieren können. Bei einer einfachen Ausführungsform der Erfindung erfolgt die Kommunikation unidirektional, so dass nur Audioinformationen von dem Mikrofonmodul auf einer Sendefrequenz an die zugeordnete Basisstation übermittelt werden. Bei weiteren Ausführungsformen ist die Kommunikation bidirektional, wobei auf dem einen oder den mehreren ergänzenden Kanälen, insbesondere Rückkanälen, Audioinformationen und/oder Konfigurations- und/oder Statusdaten übertragbar sind und/oder übertragen werden. Es ist auch möglich, dass ein Kanal für die Übertragung von Statusdaten, wie z.B. eine Batterie- oder Energiestandinformation von dem Mikrofonmodul an die Basisstation vorhanden ist.

Die Basisstationen sind untereinander vernetzt, so dass die Konfigurationsdaten und optional ergänzend die Statusdaten miteinander oder mit einer Steuerungseinrichtung ausgetauscht werden können. Die Vernetzung kann als Linie, als Ring, als Stern oder in einer anderen Topologie erfolgen. Auch eine Verbindung über das Internet ist vorstellbar. Das Protokoll der Vernetzung kann proprietär sein und/oder zum Beispiel auf dem IP-Protokoll aufbauen. Die Vernetzung kann über eine Reihe von drahtgebundenen und/oder drahtlosen Schnittstellen erfolgen. Mögliche Beispiele hierfür sind CAN, USB, Ethernet oder Bluetooth, DECT, GSM etc. Ein eigenes Format ist ebenfalls denkbar.

Das Netzwerksystem weist weiterhin die Steuerungseinrichtung auf, wobei die Steuerungseinrichtung programmtechnisch und/oder schaltungstechnisch ausgebildet ist, die Konfigurationsdaten der Basisstationen und/oder der Mikrofonmodule und/oder der Mikrofonmodul-Basisstation-Zuordnungen automatisiert zu selektieren und/oder anzupassen. Bei der Selektion macht die Steuerungseinrichtung einen Konfigurationsvorschlag, der dann beliebig an den Basisstationen und/oder Mikrofonmodulen, z.B. auch manuell, eingestellt werden kann. GGfs. macht die Steuerungseinrichtung einen Konfigurationsvorschlag, der dann beliebig manuell angepasst werden kann. Nach einer Freigabe nach der manuellen Anpassung kann vorgesehen sein, dass der manuell angepasste Konfigurationsvorschlag automatisiert umgesetzt wird. Bei der automatisierten Anpassung wird die Einstellung an den Basisstationen und/oder an den Mikrofonmodulen automatisiert durchgeführt. Die Steuerungseinrichtung kann zum einen als eine zusätzliche Funktion in einer der Basisstationen angeordnet sein, so dass diese Basisstation einen Master in dem Netzwerksystem bildet. Die Steuerungseinrichtung kann alternativ auch von einem weiteren Gerät, zum Beispiel von einem PC, übernommen werden. Es ist auch möglich, dass jede der Basisstationen eine derartige Steuerungseinrichtung aufweist, wobei sich die einzelnen Steuerungseinrichtungen kooperativ über die Konfigurationsdaten einigen.

Im Rahmen der Erfindung wird gemäß einer ersten Möglichkeit vorgeschlagen, dass die Steuerungseinrichtung die Anpassung der Konfigurationsdaten unter Berücksichtigung von gemessenen und/oder berechneten Wechselwirkungen der Mikrofonmodul-Basisstation-Zuordnungen selektiert bzw. durchführt. Diese Möglichkeit berücksichtigt, dass sich funkgestützte Mikrofonmodule gegenseitig stören können, so ihre Sendefrequenzen und/oder ihre Sendeleistung ungünstig zueinander ausgewählt sind. Bei ungünstigen Kombinationen können Intermodulationsprodukte oder Krossmodulationen entstehen, welche die Empfangsqualität der betroffenen Mikrofonmodule im Frequenzbereich der Intermodulationsprodukte stören. Aus diesem Grund ist es vorteilhaft, wenn die Mikrofonmodule in intermodulationsfreien Frequenzen zueinander angeordnet sind. Nachdem jedoch die Störungen von einer Vielzahl von Randbedingungen, wie z.B. der Sendeleistung oder der örtlichen Nähe weiterer Mikrofonmodule, abhängig sind, ist es bevorzugt, dass die Konfigurationsdaten unter Berücksichtigung von gemessenen und/oder berechneten Wechselwirkungen der Mikrofonmodul-Basisstation-Zuordnungen zueinander angepasst werden. Erfindungsgemäß ist die Steuerungseinrichtung ausgebildet, die Anpassung der Konfigurationsdaten unter Berücksichtigung des Einsatzzweckes des jeweiligen Mikrofonmoduls anzupassen. Bei diesem Aspekt der Erfindung wird beachtet, dass nicht jeder Einsatzzweck eines Mikrofonmoduls bei der Übertragung gleichwertig ist. Beispielsweise sind bei Konzerten Übertragungen von Solisten wichtiger als die Übertragung von Hintergrundstimmen oder Instrumenten. Z.B. bekommen die Mikrofonmodule mit der größeren Wichtigkeit die Konfigurationsdaten zugewiesen, die eine bessere und/oder sicherere Übertragungsqualität gewährleisten.

Während der Einsatzzweck und die Wechselwirkungen bei einfachen Ausführungsformen der Erfindung bei der Anpassung der Konfigurationsdaten voneinander unabhängig berücksichtigt werden können, ist es bei komplexeren Ausführungsformen empfehlenswert, dass beide Einflussgrößen gemeinsam bei der Anpassung der Konfigurationsdaten berücksichtigt werden: So erscheint es beispielsweise sinnvoll, Mikrofonmodule mit einer größeren Wichtigkeit Konfigurationsdaten zuzuweisen, bei denen nur geringe Wechselwirkungen mit anderen Mikrofonmodul-Basisstation-Zuordnungen vorliegen.

Mit dem vorgeschlagenen Netzwerksystem kann ein intelligentes und qualitativ hochwertiges Konfigurationsdatenmanagement umgesetzt werden. Die Steuerungseinrichtung kann durch eine verbesserte Koordination der Konfigurationsdaten die einzelnen Mikrofonmodul-Basisstation-Zuordnungen so einstellen, dass damit ein vorteilhafter Kompromiss hinsichtlich der Übertragungsqualität aller Mikrofonmodule, der Frequenzausnutzung und/oder der Priorisierung einzelner Mikrofonmodule erreicht wird.

Insbesondere ist die Steuerungseinrichtung ausgebildet, eine Liste der, vorzugsweise aller verfügbaren Basisstationen, der, vorzugsweise aller verfügbaren Mikrofonmodule und eine Liste der, vorzugsweise aller verfügbaren Sendefrequenzen zu halten.

Bei einer bevorzugten Weiterbildung der Erfindung umfassen die Konfigurationsdaten eine Zuordnung Mikrofonmodul-Basisstation, eine Sendefrequenz, eine Sendeleistung und/oder Übertragsparameter. Die Zuordnung Mikrofonmodul-Basisstation ergibt eine virtuelle Kopplung zwischen zwei Partnern, die jedoch optional im Betrieb des Netzwerksystems wieder gelöst werden kann. Die freigewordenen Partner können dann virtuell anderen Partnern zugeordnet werden. Die Sendefrequenz ist beispielsweise im Megahertzbereich angeordnet. Oftmals müssen sich die Mikrofonmodule die verfügbaren Sendefrequenzen mit anderen, erstrangigen Sendern, wie zum Beispiel Fernsehübertragung, teilen, so dass der Verteilung der Sendefrequenzen eine besonders wichtige Rolle zukommt. Hinsichtlich der Sendeleistung ist zu bemerken, dass diese bislang starr, oftmals nur in drei Stufen (low, middle, high) einstellbar ist. Wenn die Sendeleistung den Konfigurationsdaten zugeordnet ist, kann die Sendeleistung auch dynamisch, zum Beispiel mehrmals pro Sekunde, und/oder stufenlos angepasst werden.

Bei einer bevorzugten Weiterbildung der Erfindung weist die Steuerungseinrichtung ein Frequenzanalysemodul auf, welches ausgebildet ist, das Sendefrequenzspektrum zu prüfen und die verfügbaren Sendefrequenzen/ oder die Qualität der verfügbaren Sendefrequenzen zu ermitteln. Es wird zum Beispiel überprüft, ob diese frei sind und ob andere diese Frequenz stören. Die Prüfung des Sendefrequenzspektrums kann zum einen vor Inbetriebnahme des Netzwerksystems, zum anderen während des Betriebes des Netzwerksystems erfolgen. Es ist auch denkbar, dass während der Erstellung der Konfigurationsdaten für jede Mikrofonmodul-Basisstation-Zuordnung sequentiell eine Sendefrequenz festgelegt und diese aktiviert wird. Vor der Festlegung der Konfigurationsdaten für eine weitere Zuordnung wird das Sendefrequenzspektrum nochmals geprüft. Somit ist es zum einen möglich, dass eine Leermessung durchgeführt wird, wobei die Mikrofonmodule deaktiviert sind, und zum anderen eine Messung bei teil- oder vollständig aktivierten Mikrofonmodulen. Allgemein kann vorgesehen sein, dass das Ergebnis der Prüfung des Sendefrequenzspektrums bei der Anpassung der Konfigurationsdaten Berücksichtigung findet.

Bei einer Weiterbildung der Erfindung kann vorgesehen sein, dass die Steuerungseinrichtung ein Empfangsanalysemodul aufweist, welches zur Analyse von Statusdaten der Basisstation, wie die tatsächliche Empfangsqualität der Mikrofonmodule, ausgebildet ist. Die Ergebnisse des Empfangsanalysemoduls können zum Beispiel vorteilhaft bei einem Leistungsmanagement eingesetzt werden. Während des Betriebes ist zum Beispiel ein kontinuierliches, zentrales Leistungsmanagement sehr vorteilhaft. Dabei werden die einzelnen Sendeleistungen dynamisch bei allen Mikrofonmodulen angepasst und damit der Empfang für alle Mikrofonmodule deutlich verbessert. Dies ist insbesondere bei Mikrofonmodulen mit Sendern wichtig, die direkt nebeneinander in Nachbarkanälen liegen. Hier kann eine stark unterschiedliche Empfangsleistung bei den Basisstationen die Empfangsqualität spürbar beeinträchtigen oder den Empfang sogar ganz unmöglich machen. Optional ergänzend kann das Leistungsmanagement auch lokal in jeder Mikrofonmodul-Basisstation-Zuordnung durchgeführt werden. Allerdings kann bei dem lokalen Leistungsmanagement keine Korrelation zwischen den einzelnen Zuordnung erkannt und ausgenutzt werden. Erst eine gemeinsame, insbesondere zentrale Auswertung ermöglicht die beste Regelung für das Gesamtsystem. Zur Durchführung des Leistungsmanagements wird von den einzelnen Mikrofonmodul-Basisstation-Zuordnungen kontinuierlich die Empfangsqualität der einzelnen Mikrofonmodule an die Steuerungseinrichtung übermittelt. Kriterien für die Empfangsqualität können zum Beispiel die Empfangsleistung des Mikrofonmoduls, die Basisbandenergie, Kanalbitfehlerrate, die Bitfehlerrate und/oder die derzeitige Sendeleistung des Mikrofonmoduls sein. Mit diesen Daten und der Belegung der Funkkanäle kann die Steuerungseinrichtung die optimale Sendeleistung der einzelnen Mikrofonmodule bestimmen. Dabei können auch die soeben aufgeführten Kriterien mit einbezogen werden. Sobald diese Daten bei den Konfigurationsdaten berücksichtigt sind, werden diese dann an die Basisstationen und die angeschlossenen Mikrofonmodule übermittelt, die ihre Sendeleistung entsprechend anpassen. Zur Analyse weist die Steuerungseinrichtung das Empfangsanalysemodul auf, welches zur Analyse der genannten Statusdaten über die tatsächliche Empfangsqualität ausgebildet ist, wobei die Anpassung der Konfigurationsdaten unter Berücksichtigung der Analyseergebnisse erfolgt.

Bei einer vorteilhaften Weiterbildung der Erfindung umfasst das Steuerungssystem eine Datenbank mit Benutzungsprofilen zur Definition des Einsatzzweckes für mindestens eines der Mikrofonmodule. Diese Ausgestaltung erlaubt es, dass mindestens eines, einige oder jedes Mikrofonmodul und damit jeder Benutzer nach verschiedenen Kriterien klassifiziert werden kann. Besonders bevorzugt umfasst das Benutzungsprofil eine Prioritätskenngröße, eine Qualitätssollkenngröße und/oder eine Entfernungskenngröße. Bei der Prioritätskenngröße kann berücksichtigt werden, dass einige Übertragungen, zum Beispiel von Solisten, wichtiger als andere, zum Beispiel Hintergrundinstrumente, sind. Die Mikrofonmodule mit den Übertragungen mit höherer Priorität bekommen z.B. die Konfigurationsdaten zugewiesen, die eine sicherere Übertragungsqualität ermöglichen.

Die Qualitätssollkenngröße berücksichtigt, dass einige Übertragungen eine höhere Qualität der Audioinformationen, wie zum Beispiel Konzertflügel, als andere Übertragungen, zum Beispiel Sprache bei Moderation, benötigen. Die Mikrofonmodule mit den Übertragungen mit der höheren Qualitätsanforderung bekommen die Konfigurationsdaten zugewiesen, die eine höhere Übertragungsqualität sicherstellt. Ergänzend kann auch vorgesehen sein, dass Übertragungen mit einer geringeren Qualitätssollkenngröße stärker komprimiert werden. Durch die eingesparte Datenrate kann der Fehlerschutz bei der Übertragung erhöht werden, so dass diese Übertragungen auch auf schlechtere Frequenzen ohne Verluste übertragen werden können. Anstatt den Fehlerschutz zu erhöhen, kann auch die Senderbandbreite reduziert werden. So können insgesamt mehr Funkkanäle eingerichtet werden oder dieser Funkkanal kann in schmaleren, guten Frequenzlücken senden.

Die Qualität der Funkübertragung nimmt üblicher Weise mit der Entfernung ab. Daher ist es sinnvoll, den Mikrofonmodulen, die weiter entfernte Einsatzorte von den zugeordneten Basisstationen haben, Konfigurationsdaten für eine bessere Übertragung zuzuordnen. Besonders vorteilhaft ist es, wenn Mikrofonmodulen mit ähnlichen Entfernungen benachbarte Sendefrequenzen zugewiesen werden, damit die Störungen untereinander minimiert werden. Mikrofonmodule mit großem räumlichen Abstand zueinander sind dagegen in größerer Entfernung in dem Sendefrequenzspektrum voneinander weg zu legen. Dadurch wird der Leistungsunterschied zwischen benachbarten Funkkanälen minimiert, so dass die Empfangsqualität bei an gleicher Stelle oder benachbart stehenden Basisstationen gesteigert wird.

Es ist besonders bevorzugt, wenn die Steuerungseinrichtung zur iterativen Anpassung und/oder Optimierung der Konfigurationsdaten im Betrieb des Netzwerksystems ausgebildet ist. Das Netzwerksystem ist dadurch in der Lage, nicht nur auf einen Totalausfall eines Mikrofonmoduls aufgrund einer gestörten Übertragungsstrecke zu reagieren, sondern auch kleine, qualitätssteigernde Änderungen zu erreichen.

Eine mögliche Option des Netzwerksystems kann ein Umgebungsmodul bilden, wobei das Umgebungsmodul Kenndaten über die Umgebung des Netzwerksystems hält. Das Umgebungsmodul berücksichtigt den Umstand, dass sich die Empfangssituation der Mikrofonmodul-Basisstation-Zuordnungen durch die Bewegung der Mikrofonmodule bezüglich der Basisstationen und gegebenenfalls durch Veränderungen in der Umgebung ändert.

Eine erste Möglichkeit, um das Umgebungsmodul mit entsprechenden Umgebungsdaten zu versorgen, wird dadurch umgesetzt, dass das Umgebungsmodul zur Durchführung eines Testprogramms ausgebildet ist. Bei dem Testprogramm werden Tests auf den geplanten Laufwegen durchgeführt ("walk-path-tests"). Das Mikrofonmodul wird dabei auf den gleichen Strecken wie später im geplanten Betrieb bewegt. Die Empfangsqualität wird kontinuierlich und zeitbezogen aufgezeichnet, im Anschluss ausgewertet und unter Berücksichtigung dieser Ergebnisse die Konfigurationsdaten, insbesondere hinsichtlich der Sendefrequenz und/oder der Sendeleistung angepasst. Gegebenenfalls wird dieses Vorgehen iterativ wiederholt. Durch eine zentrale Auswertung der Steuerungseinrichtung können Charakteristika der einzelnen Mikrofonmodul-Basisstation-Zuordnungen bestimmt und zum Beispiel beim Frequenzmanagement berücksichtigt werden. So kann die Entfernungskenngröße in dem Benutzungsprofil besser bestimmt werden. Temporäre Einbrüche des Empfangs sind durch das Testprogramm bekannt und können - wenn frequenzselektiv - verhindert werden, indem andere Sendefrequenzen für diese Mikrofonmodule ausgewählt werden.

Eine zweite Möglichkeit zum Einlernen des Umgebungsmoduls ist eine kontinuierliche, zeitbezogene Aufzeichnung der Empfangsqualitäten und der Einstellungen bei sich wiederholenden Veranstaltungen. In einem Theaterstück zum Beispiel werden normalerweise bei jeder Aufführung die gleichen oder zumindest sehr ähnliche Laufwege zurückgelegt. Eine anschließende Auswertung kann Empfangsprobleme aufzeigen. So ist eine kontinuierliche Optimierung der Mikrofonmodule möglich.

In einer Weiterbildung der Erfindung weist die Steuerungseinrichtung ein Umschaltmodul auf, welches ausgebildet ist, die Sendefrequenz und/oder die Konfigurationsdaten einer einzigen Mikrofonmodul-Basisstation-Zuordnung zu ändern. Verschlechtert sich im Verlauf einer Übertragung die Empfangsqualität dramatisch durch einen Ortswechsel des Mikrofonmoduls oder aber durch neue Störsignale, wird vorzugsweise zunächst durch eine Leistungsänderung versucht, dies auszugleichen. Sollte das für eine optimale Übertragung nicht reichen, wird von dem Umschaltmodul die Sendefrequenz gewechselt. Besonders bevorzugt wird der Sendefrequenzwechsel so durchgeführt, dass eine Übertragung der Audioinformationen ohne Unterbrechung erreicht wird. Vorzugsweise ist das Umschaltmodul mit dem Frequenzanalysemodul gekoppelt, welches fortlaufend nach freien Sendefrequenzen sucht. Wird für eine Mikrofonmodul-Basisstation-Zuordnung eine verminderte Übertragungsqualität festgestellt (zum Beispiel anhand einer Bitfehlerrate), so wird diese Zuordnung zu einem geeigneten Zeitpunkt auf eine andere, von der Steuerungseinrichtung zugewiesene, freie Sendefrequenz umgeschaltet.

Bei einer stark verminderten Übertragungsqualität kann zum Beispiel eine sofortige Umschaltung stattfinden. Dies ist insbesondere dann der Fall, wenn das Audiosignal schon sehr stark gestört ist und eine kurze Unterbrechung in Kauf genommen werden kann. Für eine Umschaltung ohne Unterbrechung gibt es unter anderem die folgenden zwei Möglichkeiten: erstens können ein oder mehrere Symbole bei einer digitalen Übertragung genutzt werden, welche nicht für die Datenübertragung genutzt werden. Dies sind z.B. Symbole für Kanalschätzung oder Synchronisation. Gehen diese Symbole während der Umschaltzeit von einer Sendefrequenz zu einer anderen Sendefrequenz verloren, so kann trotzdem der vollständige Dateninhalt im Empfänger dekodiert werden. Die zweite Möglichkeit ist, eine Unterbrechung um Audiosignal zu nutzen. Das Mikrofonmodul muss hierzu das Audiosignal evaluieren und feststellen, wann die Leistung des Audiosignals sehr gering ist, so dass eine Unterbrechung nicht wahrnehmbar ist. Diese Lücke im Audiosignal wird genutzt, um auf eine andere Sendefrequenz zu schalten.

Eine weitere optionale Ergänzung betrifft ein Handover-Modul, welches die Zuordnung der Basisstation-Mikrofonmodul ändert. Insbesondere wird die Zuordnung eines Mikrofonmoduls zu einer ersten Basisstation auf eine Zuordnung des gleichen Mikrofonmoduls auf eine zweite Basisstation geändert. Anwendungsgebiete sind zu sehen, wenn Basisstationen an unterschiedlichen Orten bzw. in unterschiedlichen Räumen aufgestellt werden. Wird von einer Basisstation ein sich näherndes Empfangsproblem gemeldet, zum Beispiel durch eine Crossmodulation, kann die Steuerungseinrichtung freie Basisstationen, also Basisstationen, die derzeit ohne Zuordnung zu einem Mikrofonmodul sind, auf die entsprechende Sendefrequenz einstellen und dort die Empfangsqualität messen. Dies kann auch unabhängig von Problemen geschehen, um einfach die Basisstation mit der besseren Empfangsqualität zu finden. Ist eine freie Basisstation mit besserer Empfangsqualität gefunden, kann diese das Audiosignal vom Mikrofonmodul übernehmen. Es findet also ein Wechsel des Empfängerstandortes statt, aber kein Wechsel der Sendefrequenz. Weitere Anwendungsgebiete finden sich zum Beispiel bei einer Führung durch mehrere Räume mit nur einem Mikrofonmodul oder es kann eine Fläche abgedeckt werden, die weit größer als die normale Reichweite einer einzelnen Basisstation ist. Auch kann insgesamt mit geringeren Sendeleistungen der Mikrofonmodule gearbeitet werden, so die Basisstationen räumlich verteilt sind, da die Distanz zwischen Mikrofonmodul und Basisstation geringer wird.

Die Erfindung betrifft auch ein Verfahren mit den Merkmalen des Anspruchs 8 und ein Computerprogramm mit den Merkmalen des Anspruchs 9.

Weitere Merkmale, Vorteile und Wirkungen der Erfindung ergeben sich aus der nachfolgenden Beschreibung eines bevorzugten Ausführungsbeispiels der Erfindung. Dabei zeigt:
Figur 1 ein schematisches Blockdiagramm eines Netzwerksystems für Audioeinrichtungen als ein erstes Ausführungsbeispiel der Erfindung;
Figur 2 eine schematische Darstellung einer möglichen Topologie des Netzwerksystems in Figur 1;
Figur 3 das Netzwerksystem in der Figur 2 nach einem Umschaltvorgang.

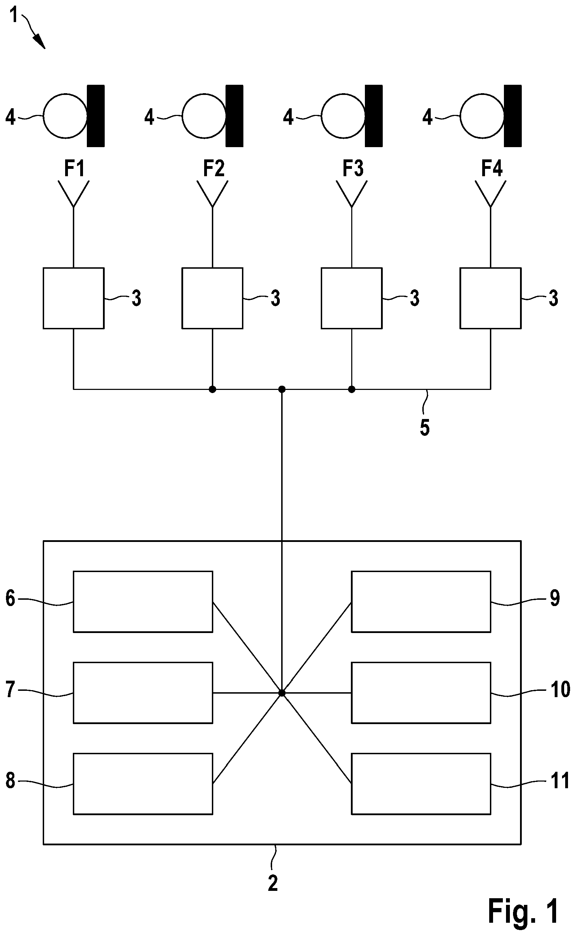

Die Figur 1 zeigt in einer stark schematisierten Blockdarstellung ein Netzwerksystem 1, welches eine Steuerungseinrichtung 2, eine Mehrzahl von Basisstationen 3 sowie mehrere Mikrofonmodule 4 umfasst. Das Netzwerksystem 1 wird beispielsweise bei Diskussionen, Theatervorstellungen, Konzerten, Moderationen etc. eingesetzt. Die Mikrofonmodule 4 sind dabei jeweils den Akteuren, Moderatoren, Sängern, Musikern zugeordnet. Die Mikrofonmodule 4 umfassen jeweils ein Mikrofon, über das Audiosignale aufgenommen werden und einen Sender, über den die Audiosignale als Audioinformationen drahtlos an jeweils eine zugeordnete Basisstation 3 übertragen werden. Zur Übertragung werden Sendefrequenzen verwendet, wobei jede Mikrofonmodul 4 - Basisstation 3 -Zuordnung eine unterschiedliche Frequenz F1, F2, F3, F4 etc. erhält. Die Audioinformationen werden von den Basisstationen 3 in nicht näher dargestellter Weise an Verstärker, Aufnahmegeräte etc. weitergeleitet.

Die Kommunikation zwischen den Basisstationen 3 und den Mikrofonmodulen 4 wird mittels Konfigurationsdaten parametrisiert, wobei die Konfigurationsdaten zunächst die Zuordnung zwischen Mikrofonmodul 4 und Basisstation 3, eine Sendefrequenz F1 ... F4, eine Sendeleistung (low, middle, high oder stufenlos) und Übertragungsparameter umfassen. Es kann auch vorgesehen sein, dass nur ein Teil dieser Daten in den Konfigurationsdaten enthalten ist. Die Konfigurationsdaten werden von der Steuerungseinrichtung 2 erzeugt, wie nachfolgend noch erläutert wird, und über ein Netzwerk 5 an die Basisstationen 3 verteilt. Das Netzwerk 5 kann eine beliebige Netzwerktopologie, insbesondere Ring, Linie, etc, aufweisen und kann ebenso drahtgebunden oder drahtlos sein. Es kann ein eigenes proprietäres Protokoll oder ein Protokoll, basierend auf dem IP-Protokoll, nutzen. Optional ergänzend werden über das Netzwerk 5 auch die Audioinformationen transportiert.

Die Steuerungseinrichtung 2 ist programmtechnisch und/oder schaltungstechnisch ausgebildet, die Konfigurationsdatensätze für insbesondere alle Zuordnungen der Basisstation 3 - Mikrofonmodul 4 zu erstellen und über das Netzwerk 5 zu verteilen. Die Konfigurationsdatensätze werden über das Netzwerk 5 unmittelbar an die Basisstationen 3 verteilt. Die Konfigurationsdatensätze werden dann entweder manuell bei den Mikrofonmodulen 4 eingestellt oder über einen weiteren Kanal von den Basisstationen oder anderen Netzwerkkomponenten an die Mikrofonmodule 4 übergeben. Ferner kann das Netzwerk 5 dazu genutzt werden, Statusinformationen über die Empfangsqualität etc. von den Basisstationen 3 bzw. den Mikrofonmodulen 4 zur Steuerungseinrichtung 2 zu transportieren.

Die Steuerungseinrichtung 2 umfasst eine Mehrzahl von Modulen, welche nachfolgend erläutert werden. Während bei diesem Ausführungsbeispiel alle Module vorgesehen sind, können bei anderen Ausführungsbeispielen auch nur ein Teil der Module realisiert sein. Die Module können entweder als ein integraler Teil der Steuerungseinrichtung 2 ausgebildet sein oder als externe Module realisiert sein, die ihre Daten dann über entsprechende Schnittstellen und/oder das Netzwerk 5 an die Steuerungseinrichtung 2 weitergeben. Die Steuerungseinrichtung 2 kann als separates Gerät, wie zum Beispiel ein PC, ausgebildet sein. Bei anderen Ausführungsbeispielen ist die Steuerungseinrichtung 2 in einem der Basisstationen 3 integriert.

Ein Frequenzanalysemodul 6 ist dazu ausgebildet, das mögliche Frequenzspektrum inklusive umfassend die Sendefrequenzen F1 ... F4 zu prüfen und freie bzw. verfügbare Sendefrequenzen und/oder deren Qualität zu erfassen. Eine derartige Frequenzanalyse kann zum einen vor der Inbetriebnahme des Netzwerksystems 1 als Initialisierungsschritt durchgeführt werden, um prinzipiell freie Sendefrequenzen aufzufinden. Es ist auch möglich, dass die Frequenzanalyse während des Betriebes durchgeführt wird, um neue Erkenntnisse über freie Sendefrequenzen und/oder deren Qualitäten unter Berücksichtigung der aktivierten Basisstationen 3 - Mikrofonmodul 4 - Zuordnungen zu erhalten. Die Ergebnisse des Frequenzanalysemoduls 4 werden bei der Gestaltung der Konfigurationsdaten berücksichtigt.

Ein Empfangsanalysemodul 7 überprüft von den einzelnen Zuordnungen kontinuierlich und/oder regelmäßig und/oder öfters die Empfangsqualität der Mikrofonmodule 4. Kriterien für die Empfangsqualität können zum Beispiel die Empfangsleistung der Mikrofonmodule 4 an den Basisstationen 3, die Basisbandenergie, Kanalbitfehlerrate, die Bitfehlerrate und/oder die derzeitige Sendeleistung des Mikrofonmoduls sein. Auch diese Ergebnisse können bei der Gestaltung der Konfigurationsdaten berücksichtigt werden.

Ein Benutzungsprofilmodul 8 umfasst eine Datenbank, in der Benutzungsprofile und/oder Kriterien gespeichert sind, die den Einsatzzweck des jeweiligen Mikrofonmoduls 4 betreffen. Beispielsweise umfasst ein Benutzungsprofil eines Mikrofonmoduls 4 eine Prioritätskenngröße, eine Qualitätssollkenngröße und/oder eine Entfernungskenngröße. Durch derartige personalisierte Mikrofonmodule 4 können die Konfigurationsdaten so abgestimmt werden, dass wichtigere Mikrofonmodule 4 einen besseren Empfang und weniger wichtige Mikrofonmodule 4 nachrangig behandelt werden.

Ein Umgebungsmodul 9 umfasst eine weitere Datenbank, die Informationen über die Einsatzumgebung des Netzwerksystems 1, insbesondere der Mikrofonmodule 4 bzw. der Basisstationen 3 enthält. In dem Umgebungsmodul 9 werden Informationen über die spezifische Umgebung gehalten, wie zum Beispiel bereichsweise Abschattungen, Störungen etc.

Ein Umschaltmodul 10 dient dazu, eine Zuordnung Basisstation 3 - Mikrofonmodul 4 von einer ersten Sendefrequenz FX auf eine zweite Sendefrequenz FY umzuschalten, wenn dies zum Beispiel aufgrund von Störungen als notwendig erachtet wird.

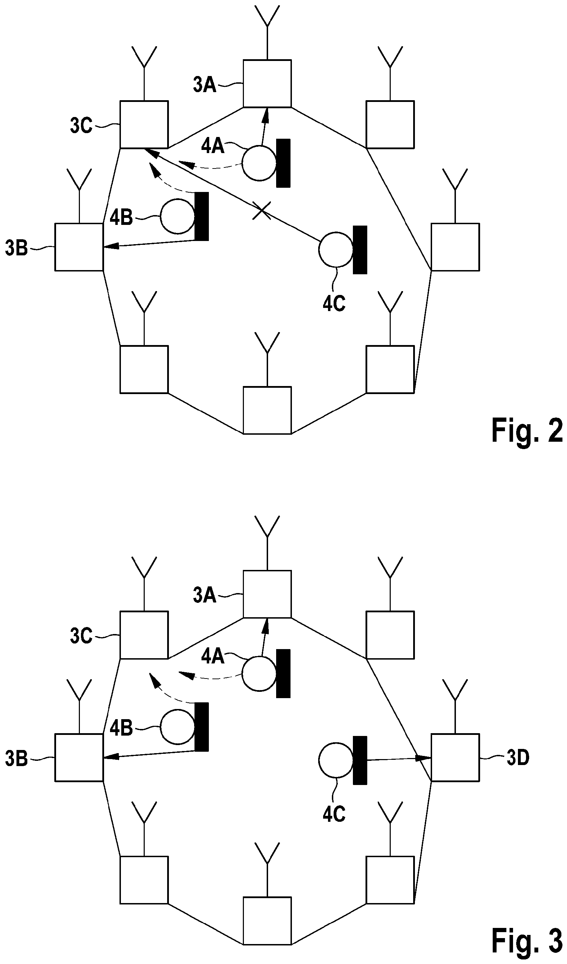

Ein Handover-Modul 11 ist dazu ausgebildet, einem Mikrofonmodul 4 einen Wechsel von einer ersten Basisstation 3 zu einer zweiten Basisstation 3' zu ermöglichen. Dieser Wechsel ist beispielsweise notwendig, wenn das Mikrofonmodul 4 aus dem Empfangsbereich der ersten Basisstation 3 und in den Empfangsbereich der weiteren Basisstation 3' getragen wird. Es ist auch möglich, wenn eine Basisstation 3 durch weitere Mikrofonmodule 4 aufgrund von Crossmodulationen überschattet ist. Diese Situationen zeigen die Figuren 2 und 3, wobei das Netzwerksystem 1 hier in einer Ringtopologie dargestellt ist. Einander entsprechende Teile tragen in den Figuren 2 und 3 einander entsprechende Bezugsziffern, wie in der Figur 1.

Bei der Figur 2 ist die Ausgangslage dargestellt, wobei einem ersten Mikrofonmodul 4A eine erste Basisstation 3A, einem zweiten Mikrofonmodul 4B eine zweite Basisstation 3B und einem dritten Mikrofonmodul 4C eine dritte Basisstation 3C zugeordnet ist. Wenn die Mikrofonmodule 4 A, B ortsnah zu der Basisstation 3C positioniert sind, kann es durch ungünstige Wahl der Sendefrequenz und der Sendeleistung zu sogenannten Crossmodulationen, also Störungen in der Sendefrequenz des Mikrofonmoduls 4 C kommen. In diesem Fall wird die Störung durch das Empfangsanalysemodul 7 aufgenommen und das Umschaltmodul 10 setzt eine Umschaltung der zu dem Mikrofonmodul 4C zugeordneten Basisstation 3C zu einer neuen Basisstation 3D um, welche bessere Empfangsbedingungen für die Audioinformation bietet. Dieser Übergang ist in der Figur 3 dargestellt.

Durch das Netzwerksystem 1 lassen sich eine Vielzahl von Anwendungen realisieren:

### Anwendung: Frequenzmanagement

Bei dem Frequenzmanagement wird zum einen das Benutzungsprofilmodul 8 genutzt, um jedem Mikrofonmodul 4 ein eigenes Benutzungsprofil zuzuweisen. Zur Durchführung des Frequenzmanagements wird durch das Frequenzanalysemodul 6 das verfügbare Frequenzspektrum zuerst überprüft und die Qualität aller Funkkanäle ermittelt, zum Beispiel, ob sie frei sind und ob andere diese Frequenzen stören. Anhang des Benutzungsprofils, der Funkkanalqualität und aller relevanten Intermodulationsprodukte ermittelt die Steuerungseinrichtung 2 die optimale Verteilung der Mikrofonmodule 4 auf die verfügbaren Kanäle (Sendefrequenzen) und nimmt eine eventuell notwendige Anpassung der Übertragungsparameter wie Audioqualität oder Fehlerschutz vor. Diese Informationen werden dann als Konfigurationsdaten an die Basisstationen 3 und die Mikrofonmodule 4 übermittelt. Alternativ kann für jedes Mikrofonmodul 4 sequentiell eine Sendefrequenz festgelegt werden und diese dann am Mikrofonmodul 4 eingestellt werden. Dazu muss keine Berechnung der Frequenzen mit Intermodulationsprodukten stattfinden, statt dessen können zwischendurch freie Sendefrequenzen jeweils neu durch das Frequenzanalysemodul 6 ausgemessen werden. Eine eindeutige Zuordnung der Mikrofonmodule 4 zu den jeweiligen Benutzern ist im Anschluss notwendig, da die Mikrophonmodule 4 nicht mehr beliebig austauschbar sind, sondern diese definierte Eigenschaften aufgrund der Benutzerprofile besitzen. Das Frequenzmanagement wird normaler Weise bei der Initialisierung einmalig durchgeführt, kann aber auch während der Übertragungen, also im Betrieb, mehrmals und/oder iterativ angepasst werden.

### Anwendung: Analyse der Empfangssituation

Um die Qualität der verfügbaren Funkkanäle zu ermitteln, reicht es nicht aus, sie einmal statisch zu scannen. Die Empfangssituation ändert sich durch die Bewegung der Mikrofonmodule 4 bezüglich der Basisstationen 3 durch Veränderung in der Umgebung. Diese Dynamik wird durch Testprogramme erfasst und bei der Ermittlung der Konfigurationsdaten berücksichtigt. Diese Funktion wird in dem Umgebungsmodul 9 umgesetzt. Um diese dynamische Natur des Systems zu ermitteln, werden Tests auf den Laufwegen durchgeführt.

Bei einer ersten Möglichkeit werden die Mikrofonmodule auf den gleichen Strecken wie später im Betrieb bewegt, wobei die Empfangsqualität aufgezeichnet wird und im Anschluss ausgewertet wird. Diese Auswertung stellt die Basis für die Anpassung der Konfigurationsdaten dar, wobei durch eine zentrale Auswertung durch die Steuerungseinrichtung 2 alle Zuordnungen gemeinsam analysiert und auch deren Wechselwirkungen und/oder gegenseitigen Beeinflussungen berücksichtigt werden können. Insbesondere können Mikrofonmodule 4 mit ähnlichen Empfangsleistungen über die Zeit in dem Empfangsanalysemodul 7 erkannt und von dem Umgebungsmodul 9 als beieinander stehend definiert werden, selbst wenn diese tatsächlich örtlich getrennt sind, wobei diesen bei nahen Sendefrequenzen ähnliche Sendeleistungen zugeordnet werden. Bei Änderungen der Konfigurationsdaten kann es sich als notwendig erweisen, dass der Test nochmals durchgeführt wird.

Eine zweite Möglichkeit ist, dass die Empfangsqualitäten durch das Empfangsanalysemodul 7 während sich wiederholender Veranstaltungen aufgenommen werden. Bei den Veranstaltungen werden normalerweise die gleichen oder zumindest ähnliche Laufwege zurückgelegt. Eine nachfolgende Analyse der aufgenommenen Daten durch das Umgebungsmodul 9 kann ist eine Grundlage für eine iterative Optimierung der Konfigurationsparameter.

### Anwendung: Leistungsmanagement

Während des Betriebes ist ein kontinuierliches, zentrales Leistungsmanagement sehr vorteilhaft. Dabei werden die einzelnen Sendeleistungen in den Konfigurationsdatensätzen dynamisch bei allen Mikrofonmodulen 4 angepasst und damit der Empfang für alle Zuordnungen Mikrofonmodul 4 - Basisstation 3 deutlich verbessert. Dies ist insbesondere bei Mikrofonmodulen 4 wichtig, die mit den Sendefrequenzen direkt nebeneinander in Nachbarkanälen liegen. Hier kann eine stark unterschiedliche Empfangsleistung die Empfangsqualität spürbar beeinträchtigen oder den Empfang sogar ganz unmöglich machen. Ein Leistungsmanagement ist zwar auch lokal in jeder Zuordnung für sich möglich. Allerdings können dabei keine Korrelationen zwischen den einzelnen Zuordnungen erkannt und ausgenutzt werden. Erst die zentrale Auswertung durch die Steuerungseinrichtung 2 ermöglicht die beste Regelung über Systemgrenzen hinweg. Zur Durchführung des Leistungsmanagement wird von den einzelnen Zuordnungen kontinuierlich die Empfangsqualität durch das Empfangsanalysemodul 7 überwacht. Kriterien für die Empfangsqualität können z.B. die Empfangsleistung des Senders, die Basisbandenergie, Kanalbitfehlerrate, die Bitfehlerrate und/oder die derzeitige Sendeleistung des Mirofonmoduls 4 sein. Mit diesen Daten kann die Steuerungseinrichtung 2 die optimalen Sendeleistungen in den Konfigurationsdaten einstellen. Die geänderten Konfigurationsdaten werden bevorzugt über einen geeigneten Rückkanal zwischen Basisstation 3 und Mikrofonmodul 4 übertragen.

### Anwendung: dynamische Frequenzbelegung

Verschlechtert sich im Verlauf einer Übertragung die Empfangsqualität dramatisch durch einen Ortswechsel des Mikrofonmoduls 4 oder aber durch neue Störsignale, wird erst mit dem Leistungsmanagement versucht, dies auszugleichen. Sollte das für eine optimale Übertragung nicht reichen, muss möglicher Weise die Sendefrequenz F1 ... FX einzelner Zuordnungen gewechselt werden. Dieser Wechsel wird durch das Umschaltmodul 10 umgesetzt. Hierbei wird durch das Frequenzanalysemodul mindestens eine freie Sendefrequenz an die Steuerungseinrichtung 2 gemeldet. Wird für eine Zuordnung eine verminderte Übertragungsqualität festgestellt, so initiiert das Umschaltmodul 10 eine Umschaltung der Zuordnung auf die freie Frequenz. Der Zeitpunkt der Umschaltung wird z.B. während der Periode der Übertragung eines redundanten Signalanteils, während einer Pause des Audiosignals und/oder unverzüglich durchgeführt.

### Anwendung: Handover

Bei einem Handover werden Basisstationen 3 an unterschiedlichen Orten bzw. in unterschiedlichen Räumen aufgestellt. Wird von einer Basisstation 3 ein sich näherndes Empfangsproblem gemeldet, zum Beispiel durch eine Crossmodulation, kann die Steuerungseinrichtung 2 durch das Handover-Modul 11 freie Basisstationen, das heißt, Basisstationen 3 derzeit ohne zugeordnetes Mikrofonmodul 4, auf die entsprechende Sendefrequenz des Mikrofonmoduls 4 einstellen und dort die Empfangsqualität messen. Dies kann auch unabhängig von Problemen geschehen, um einfach die Basisstation mit der besseren Empfangsqualität zu finden. Ist eine freie Basisstation mit besserer Empfangsqualität gefunden, kann diese das Mirkofonmodul 4 übernehmen, so dass eine neue Zuordnung Basisstation 3 - Mikrofonmodul 4 gebildet wird. Mit dem Handover-Modul 11 wird z.B. eine Führung durch mehrere Räume mit nur einem Mirkofonmodul 4 möglich oder es kann eine größere Fläche abgedeckt werden, die weit größer als die normale Reichweite einer einzelnen Basisstation 3 ist. Ferner kann mit einer geringeren Sendeleistungen gearbeitet werden, wenn die Basisstationen räumlich verteilt sind.

## Patentansprüche

1. Netzwerksystem (1) für Audioeinrichtungen (4) zur Steuerung und/oder Parametrisierung von Mikrofonmodulen (4) für Theatervorstellungen, Fernsehauftritten und Diskussionen,
mit mehreren Basisstationen (3) und
mit mehreren Mikrofonmodulen (4), wobei die Mikrofonmodule (4) den Basisstationen (3) über Konfigurationsdaten zugeordnet und/oder zuordbar sind und wobei jedes Mikrofonmodul (4) einer Mikrofonmodul-Basisstation-Zuordnung zur Übermittlung von Audioinformationen auf einer Sendefrequenz (F1 , F2, F3, F4, FX, FY) an die zugeordnete Basisstation (3) der gleichen Mikrofonmodul-Basisstation-Zuordnung ausgebildet ist, wobei die Basisstationen (3) miteinander vernetzt sind, so dass die Konfigurationsdaten austauschbar sind,
mit einer Steuerungseinrichtung (2), wobei die Steuerungseinrichtung (2) programmtechnisch und/oder schaltungstechnisch ausgebildet ist, die Konfigurationsdaten der Basisstationen (3) und/oder der Mikrofonmodule (4) und/oder der Mikrofonmodul-Basisstation-Zuordnungen automatisiert zu selektieren und/oder anzupassen,
wobei
(la) die Steuerungseinrichtung (2) zur Selektion und/oder Anpassung der Konfigurationsdaten unter Berücksichtigung von gemessenen Wechselwirkungen der Mikrofonmodul-Basisstation-Zuordnungen ausgebildet ist, wobei die Steuerungseinrichtung ein Frequenzanalysemodul (6) aufweist, welches ausgebildet ist, bei einer Initialisierung und/oder im Betrieb des Netzwerksystems ein Sendefrequenzspektrum zu prüfen und verfügbare Sendefrequenzen und/oder eine Qualität der verfügbaren Sendefrequenzen zu ermitteln, wobei die
Anpassung der Konfigurationsdaten unter Berücksichtigung der verfügbaren Sendefrequenzen und/oder unter Berücksichtigung der Qualität der verfügbaren Sendefrequenzen erfolgt und/oder wobei die Steuerungseinrichtung (2) ein Empfangsanalysemodul (7) aufweist, welches zur Analyse von Statusdaten der Basisstationen (3) über eine tatsächliche Empfangsqualität ausgebildet ist, wobei
die Anpassung der Konfigurationsdaten unter Berücksichtigung der Analyseergebnisse erfolgt,
und/oder
(Ib) die Steuerungseinrichtung (2) zur Selektion und/oder Anpassung der Konfigurationsdaten unter Berücksichtigung von berechneten Wechselwirkungen der Mikrofonmodul-Basisstation-Zuordnungen ausgebildet ist, so dass die
Mikrofonmodule (4) in intermodulationsfreien Frequenzen zueinander angeordnet
sind,
sowie
(II) dass die Steuerungseinrichtung (2) zur Selektion und/oder Anpassung der
Konfigurationsdaten unter Berücksichtigung eines Einsatzzweckes des jeweiligen
Mikrofonmoduls (4) ausgebildet ist, wobei die Steuerungseinrichtung (2) ein Benutzungsprofil zur Definition des Einsatzzweckes für mindestens eines der Mikrofonmodule (4) hält, wobei die Anpassung der Konfigurationsdaten unter Berücksichtigung des Benutzungsprofils erfolgt, wobei das Benutzungsprofil eine Prioritätskenngröße, eine Qualitätssollkenngröße und/oder eine Entfernungskenngröße umfasst.

2. Netzwerksystem (1) nach Anspruch 1, **dadurch gekennzeichnet, dass** die Konfigurationsdaten eine Zuordnung Mikrofonmodul-Basisstation, eine Sendefrequenz, eine Sendeleistung und/oder Übertragungsparameter umfassen.

3. Netzwerksystem (1) nach einem der vorhergehenden Ansprüche, **dadurch gekennzeichnet, dass** die Steuerungseinrichtung (2) zur iterativen und/oder regelmäßigen Anpassung der Konfigurationsdaten im Betrieb ausgebildet ist.

4. Netzwerksystem (1) nach einem der vorhergehenden Ansprüche, **dadurch gekennzeichnet, dass** die Steuerungseinrichtung (2) ein Umgebungsmodul (9) aufweist, wobei das Umgebungsmodul (9) Kenndaten über die Umgebung, insbesondere hinsichtlich einer Empfangsqualität, des
Netzwerksystems (1) hält.

5. Netzwerksystem (1) nach Anspruch 4, **dadurch gekennzeichnet**, das die Kenndaten über die Umgebung im Betrieb des Netzwerksystems erfasst und/oder durch eine Testprozedur erzeugt werden.

6. Netzwerksystem (1) nach einem der vorhergehenden Ansprüche, **dadurch gekennzeichnet, dass** die Steuerungseinrichtung (2) ein Umschaltmodul (10) aufweist, welches vorzugsweise ereignisgesteuert die Sendefrequenz und/oder die Konfigurationsdaten einer Basisstation-Mikrofonmodul Zuordnung ändert.

7. Netzwerksystem (1) nach einem der vorhergehenden Ansprüche, **dadurch gekennzeichnet, dass** die Steuerungseinrichtung (2) ein Handover-Modul (11) aufweist, welches zur Änderung der Zuordnung Basisstation-Mikrofonmodul ausgebildet ist.

8. Verfahren zur Konfiguration eines Netzwerksystems (1) nach einem der vorhergehenden Ansprüche mit mehreren Basisstationen (3) und mit mehreren Mikrofonmodulen (4), wobei die Mikrofonmodule (4) den Basisstationen (3) über Konfigurationsdaten zugeordnet werden und wobei jedes Mikrofonmodul (4) einer Mikrofonmodul-Basisstation-Zuordnung zur Übermittlung von Audioinformationen auf einer Sendefrequenz an die zugeordnete Basisstation (3) der gleichen Mikrofonmodul-Basisstation-Zuordnung ausgebildet ist, wobei die Basisstationen (3) über ein Netzwerk (5) Konfigurationsdaten austauschen und wobei die Konfigurationsdaten der Basisstationen (3) und/oder der Mikrofonmodule (4) und/oder der Mikrofonmodul-Basisstation-Zuordnungen automatisiert selektiert und/oder angepasst werden,
wobei
(la) die Selektion und/oder Anpassung der Konfigurationsdaten unter Berücksichtigung von gemessenen Wechselwirkungen der Mikrofonmodul-Basisstation-Zuordnungen erfolgt, wobei mittels eines Frequenzanalysemoduls (6) bei einer Initialisierung und/oder im Betrieb des Netzwerksystems ein Sendefrequenzspektrum geprüft wird und dadurch verfügbare Sendefrequenzen und/oder eine Qualität der verfügbaren Sendefrequenzen ermittelt werden, wobei die Anpassung der Konfigurationsdaten unter Berücksichtigung der verfügbaren Sendefrequenzen und/oder unter Berücksichtigung der Qualität der verfügbaren Sendefrequenzen erfolgt und/oder wobei mittels eines Empfangsanalysemoduls (7) eine Analyse von Statusdaten der Basisstationen (3) über eine tatsächliche Empfangsqualität erfolgt, wobei die Anpassung der Konfigurationsdaten unter Berücksichtigung der Analyseergebnisse erfolgt,
und/oder
(Ib) die Selektion und/oder Anpassung der Konfigurationsdaten unter Berücksichtigung von berechneten Wechselwirkungen der Mikrofonmodul-Basisstation-Zuordnungen erfolgt, so dass die Mikrofonmodule (4) in intermodulationsfreien Frequenzen zueinander angeordnet sind, sowie
(II) die Selektion und/oder Anpassung der Konfigurationsdaten unter Berücksichtigung eines Einsatzzweckes des jeweiligen Mikrofonmoduls (4) erfolgt, wobei ein Benutzungsprofil zur Definition des Einsatzzweckes für mindestens eines der Mikrofonmodule (4) gehalten wird, wobei die Anpassung der Konfigurationsdaten unter Berücksichtigung des Benutzungsprofils erfolgt, wobei das Benutzungsprofil eine Prioritätskenngröße, eine Qualitätssollkenngröße und/oder eine Entfernungskenngröße umfasst.

9. Computerprogramm mit Programm-Code Mitteln, um alle Schritte des Verfahrens nach Anspruch 8 durchzuführen, wenn das Programm auf Computern im Netzwerksystem ausgeführt wird.

## Claims

1. Network system (1) for audio equipment (4) for controlling and/or parameterizing microphone modules (4) for theatre productions, television appearances and discussions,
comprising a plurality of base stations (3) and comprising a plurality of microphone modules (4), wherein the microphone modules (4) are allocated and/or can be allocated to the base stations (3) via configuration data, and wherein each microphone module (4) of a microphone module-base station allocation is designed to transmit audio information on a transmitting frequency (F1, F2, F3, F4, FX, FY) to the associated base station (3) of the same microphone module-base station allocation, wherein the base stations (3) are networked together so that the configuration data are exchangeable, comprising a control device (2), wherein the control device (2) is designed in the form of a program and/or of a circuit to select and/or adapt the configuration data of the base stations (3) and/or of the microphone modules (4) and/or of the microphone module-base station allocations in an automated manner,
wherein
(Ia) the control device (2) is designed to select and/or adapt the configuration data taking into consideration measured interactions of the microphone module-base station allocations, wherein the control device has a frequency analysis module (6) which is designed to test a transmitting frequency spectrum during an initialization and/or the operation of the network system and to determine available transmitting frequencies and/or a quality of the available transmitting frequencies, wherein the configuration data are adapted taking into consideration the available transmitting frequencies and/or taking into consideration the quality of the available transmitting frequencies, and/or wherein the control device (2) has a reception analysis module (7) which is designed to analyse status data of the base stations (3) via an actual quality of reception, wherein the configuration data are adapted taking into consideration the analysis results,
and/or
(Ib) the control device (2) is designed to select and/or adapt the configuration data taking into consideration calculated interactions of the microphone module-base station allocations such that the microphone modules (4) are arranged at intermodulation-free frequencies with respect to one another,
and (II) the control device (2) is designed to select and/or adapt the configuration data taking into consideration a purpose of use of the respective microphone module (4), wherein the control device (2) holds a usage profile for defining the purpose of use for at least one of the microphone modules (4), wherein the configuration data are adapted taking into consideration the usage profile, wherein the usage profile comprises a priority parameter, a nominal quality parameter and/or a distance parameter.

2. Network system (1) according to Claim 1, **characterized in that** the configuration data comprise a microphone module-base station allocation, a transmitting frequency, a transmitting power and/or transmission parameters.

3. Network system (1) according to one of the preceding claims, **characterized in that** the control device (2) is designed for the iterative and/or regular adaptation of the configuration data during operation.

4. Network system (1) according to one of the preceding claims, **characterized in that** the control device (2) has an environmental module (9), wherein the environmental module (9) holds characteristic data about the environment, especially with regard to a quality of reception, of the network system (1).

5. Network system (1) according to Claim 4, **characterized in that** the characteristic data about the environment are detected during operation of the network system and/or generated by a test procedure.

6. Network system (1) according to one of the preceding claims, **characterized in that** the control device (2) has a switching module (10) which changes, preferably in an event-controlled manner, the transmitting frequency and/or the configuration data of a base station-microphone module allocation.

7. Network system (1) according to one of the preceding claims, **characterized in that** the control device (2) has a handover module (11) which is designed to change the base station-microphone module allocation.

8. Method for configuring a network system (1) according to one of the preceding claims, comprising a plurality of base stations (3) and a plurality of microphone modules (4), wherein the microphone modules (4) are allocated to the base stations (3) via configuration data, and wherein each microphone module (4) of a microphone module-base station allocation is designed to transmit audio information on a transmitting frequency to the associated base station (3) of the same microphone module-base station allocation, wherein the base stations (3) exchange configuration data via a network (5), and wherein the configuration data of the base stations (3) and/or of the microphone modules (4) and/or of the microphone module-base station allocations are selected and/or adapted in an automated manner,
wherein
(la) the configuration data are selected and/or adapted taking into consideration measured interactions of the microphone module-base station allocations, wherein a transmitting frequency spectrum is tested by means of a frequency analysis module (6) during an initialization and/or the operation of the network system, and available transmitting frequencies and/or a quality of the available transmitting frequencies is/are determined thereby, wherein the configuration data are adapted taking into consideration the available transmitting frequencies and/or taking into consideration the quality of the available transmitting frequencies, and/or status data of the base stations (3) are analysed by means of a reception analysis module (7) via an actual quality of reception, wherein the configuration data are adapted taking into consideration of the analysis results,
and/or
(Ib) the configuration data are selected and/or adapted taking into consideration calculated interactions of the microphone module-base station allocations such that the microphone modules (4) are arranged at intermodulation-free frequencies with respect to one another,
and
(II) the configuration data are selected and/or adapted taking into consideration a purpose of use of the respective microphone module (4), wherein a usage profile for defining the purpose of use is held for at least one of the microphone modules (4), wherein the configuration data are adapted taking into consideration the usage profile, wherein the usage profile comprises a priority parameter, a nominal quality parameter and/or a distance parameter.

9. Computer program comprising program code means in order to perform all steps of the method according to Claim 8 when the program is executed on computers in the network system.

## Revendications

1. Système de réseau (1) pour dispositifs audio (4) permettant de commander et/ou de paramétrer des modules de microphone (4) pour des spectacles de théâtre, des passages à la télévision et des débats,
comprenant plusieurs stations de base (3), et comprenant plusieurs modules de microphone (4), les modules de microphone (4) étant et/ou pouvant être associés aux stations de base (3) par l'intermédiaire de données de configuration, et dans lequel chaque module de microphone (4) d'une association entre un module de microphone et une station de base est réalisé pour transmettre des informations audio sur une fréquence d'émission (F1, F2, F3, F4, FX, FY) à la station de base associée (3) de la même association de module de microphone et station de base, les stations de base (3) étant mises en réseau les unes avec les autres de sorte que les données de configuration peuvent être échangées,
comprenant un dispositif de commande (2), le dispositif de commande (2) étant réalisé sous forme de programme et/ou de circuit pour sélectionner et/ou adapter automatiquement les données de configuration des stations de base (3) et/ou des modules de microphone (4) et/ou des associations entre modules de microphone et stations de base,
dans lequel
(la) le dispositif de commande (2) est réalisé pour sélectionner et/ou adapter les données de configuration en tenant compte d'interactions mesurées des associations entre modules de microphone et stations de base, le dispositif de commande présentant un module d'analyse de fréquence (6) qui est réalisé pour vérifier un spectre de fréquences d'émission au moment d'une initialisation et/ou en cours de fonctionnement du système de réseau et pour déterminer des fréquences d'émission disponibles et/ou une qualité des fréquences d'émission disponibles, dans lequel l'adaptation des données de configuration est effectuée en tenant compte des fréquences d'émission disponibles et/ou en tenant compte de la qualité des fréquences d'émission disponibles, et/ou dans lequel le dispositif de commande (2) présente un module d'analyse de réception (7) qui est réalisé pour analyser des données de statut des stations de base (3) par l'intermédiaire d'une qualité de réception réelle, dans lequel l'adaptation des données de configuration est effectuée en tenant compte des résultats d'analyse, et/ou (Ib) le dispositif de commande (2) est réalisé pour sélectionner et/ou adapter les données de configuration en tenant compte d'interactions calculées des associations entre modules de microphone et stations de base de sorte que les modules de microphone (4) sont disposés les uns par rapport aux autres sur des fréquences sans intermodulation,
et (II) le dispositif de commande (2) est réalisé pour sélectionner et/ou adapter les données de configuration en tenant compte d'un usage prévu du module de microphone (4) respectif, le dispositif de commande (2) maintenant un profil d'utilisation pour définir l'usage prévu pour au moins l'un des modules de microphone (4), l'adaptation des données de configuration étant effectuée en tenant compte du profil d'utilisation, le profil d'utilisation comprenant une grandeur caractéristique de priorité, une grandeur caractéristique de consigne de qualité et/ou une grandeur caractéristique de distance.

2. Système de réseau (1) selon la revendication 1, **caractérisé en ce que** les données de configuration comprennent une association entre un module de microphone et une station de base, une fréquence d'émission, une puissance d'émission et/ou un paramètre de transmission.

3. Système de réseau (1) selon l'une quelconque des revendications précédentes, **caractérisé en ce que** le dispositif de commande (2) est réalisé pour adapter les données de configuration en cours de fonctionnement de manière itérative et/ou périodique.

4. Système de réseau (1) selon l'une quelconque des revendications précédentes, **caractérisé en ce que** le dispositif de commande (2) présente un module d'environnement (9), le module d'environnement (9) maintenant des données caractéristiques concernant l'environnement, en particulier quant à une qualité de réception, du système de réseau (1).

5. Système de réseau (1) selon la revendication 4, **caractérisé en ce que** les données caractéristiques concernant l'environnement sont détectées en cours de fonctionnement du système de réseau et/ou sont générées par une procédure de test.

6. Système de réseau (1) selon l'une quelconque des revendications précédentes, **caractérisé en ce que** le dispositif de commande (2) présente un module de commutation (10) qui modifie la fréquence d'émission et/ou les données de configuration d'une association entre une station de base et un module de microphone de préférence de manière commandée par des événements.

7. Système de réseau (1) selon l'une quelconque des revendications précédentes, **caractérisé en ce que** le dispositif de commande (2) présente un module de transfert (11) qui est réalisé pour modifier l'association entre une station de base et un module de microphone.

8. Procédé de configuration d'un système de réseau (1) selon l'une quelconque des revendications précédentes, comprenant plusieurs stations de base (3) et comprenant plusieurs modules de microphone (4), les modules de microphone (4) étant et/ou pouvant être associés aux stations de base (3) par l'intermédiaire de données de configuration, et dans lequel chaque module de microphone (4) d'une association entre un module de microphone et une station de base est réalisé pour transmettre des informations audio sur une fréquence d'émission à la station de base associée (3) de la même association de module de microphone et station de base, les stations de base (3) échangeant des données de configuration sur un réseau (5), et les données de configuration des stations de base (3) et/ou des modules de microphone (4) et/ou des associations entre modules de microphone et stations de bases sont sélectionnées et/ou adaptées automatiquement,
dans lequel
(la) la sélection et/ou l'adaptation des données de configuration sont effectuées en tenant compte d'interactions mesurées des associations entre modules de microphone et stations de base, dans lequel un module d'analyse de fréquence (6) permet de vérifier un spectre de fréquences d'émission au moment d'une initialisation et/ou en cours de fonctionnement du système de réseau et des fréquences d'émission disponibles et/ou une qualité des fréquences d'émission disponibles sont ainsi déterminées, l'adaptation des données de configuration étant effectuée en tenant compte des fréquences d'émission disponibles et/ou en tenant compte de la qualité des fréquences d'émission disponibles, et/ou dans lequel un module d'analyse de réception (7) permet d'effectuer une analyse de données de statut des stations de base (3) par l'intermédiaire d'une qualité de réception réelle, l'adaptation des données de configuration étant effectuée en tenant compte des résultats d'analyse, et/ou
(Ib) la sélection et/ou l'adaptation des données de configuration sont effectuées en tenant compte d'interactions calculées des associations entre modules de microphone et stations de base de sorte que les modules de microphone (4) sont disposés les uns par rapport aux autres sur des fréquences sans intermodulation,
et (II) la sélection et/ou l'adaptation des données de configuration sont effectuées en tenant compte d'un usage prévu du module de microphone (4) respectif, un profil d'utilisation pour définir l'usage prévu pour au moins l'un des modules de microphone (4) étant maintenu, l'adaptation des données de configuration étant effectuée en tenant compte du profil d'utilisation, le profil d'utilisation comprenant une grandeur caractéristique de priorité, une grandeur caractéristique de consigne de qualité et/ou une grandeur caractéristique de distance.

9. Programme informatique comprenant des moyens de code programme pour effectuer toutes les étapes du procédé selon la revendication 8 si le programme est exécuté sur des ordinateurs dans le système de réseau.
